# EUROPEAN PATENT APPLICATION

(11) **EP 2 639 945 A2**
(43) Date of publication of application: **18.09.2013**
(21) Application number: 12174718.2
(22) Date of filing: 03.07.2012
(51) Int. Cl.: H02K 11/00

(54) **Motor driving device**

(30) Priority: 14.03.2012 JP 2012057086
(71) Applicant: Kabushiki Kaisha Yaskawa Denki, Kitakyushu-Shi Fukuoka 806 (JP)
(72) Inventor: Soma, Akira, Kitakyushu-shi, Fukuoka 806-0004 (JP); Hara, Hidenori, Kitakyushu-shi, Fukuoka 806-0004 (JP); Takatsuka, Yushi, Kitakyushu-shi, Fukuoka 806-0004 (JP)
(74) Representative: Viering, Jentschura & Partner

(57) **Abstract**

This motor driving device (10) includes a motor (3) including a high speed drive coil (3a) and a low speed drive coil (3b), a coil switching portion (4) switching connection states of the high speed drive coil and the low speed drive coil of the motor, a power converter (1) connected to the motor, and a single first case portion (11) storing at least the motor, the coil switching portion, and the power converter.

## Description

### BACKGROUND OF THE INVENTION

### Field of the Invention

The present invention relates to a motor driving device.

### Description of the Background Art

A motor driving device including a motor having a high speed drive coil and a low speed drive coil is known in general. Japanese Patent Laying-Open No. 2010-017055 discloses a motor driving device including a motor having a high speed drive coil and a low speed drive coil, a coil switching portion switching the connection states of the two coils of the motor, and an inverter (power converter) connected to the motor.

In the conventional motor driving device including the motor, the coil switching portion, and the power converter disclosed in the aforementioned Japanese Patent Laying-Open No. 2010-017055, the motor, the coil switching portion, and the power converter are generally stored in separate case portions and placed separately.

However, in the aforementioned conventional motor driving device, the motor, the coil switching portion, and the power converter are stored in the separate case portions and placed separately, so that a dead space may be formed between each of the case portions storing the motor, the coil switching portion, and the power converter. In this case, it is difficult to save space.

### SUMMARY OF THE INVENTION

The present invention has been proposed in order to solve the aforementioned problem, and an object of the present invention is to provide a motor driving device capable of saving space.

A motor driving device according to an aspect includes a motor including a high speed drive coil and a low speed drive coil, a coil switching portion switching connection states of the high speed drive coil and the low speed drive coil of the motor, a power converter connected to the motor, and a single first case portion storing at least the motor, the coil switching portion, and the power converter.

In the motor driving device according to the aspect, as hereinabove described, the motor, the coil switching portion, and the power converter are stored in the single first case portion. Thus, formation of a dead space between each case portion can be suppressed, dissimilarly to a case where the motor, the coil switching portion, and the power converter are stored in separate case portions and placed separately. Therefore, space can be saved. Furthermore, a plurality of case portions to store the motor, the coil switching portion, and the power converter may not be provided, and hence the number of components can be reduced.

According to the aforementioned motor driving device, space can be saved.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the schematic structure of a vehicle and a motor driving portion according to a first embodiment;
Fig. 2 is a perspective view showing the overall structure of the motor driving portion according to the first embodiment;
Fig. 3 is an exploded perspective view of the motor driving portion shown in Fig. 2;
Fig. 4 is a perspective view for illustrating a cooling tube provided in a case portion of the motor driving portion shown in Fig. 2;
Fig. 5 is a perspective view of the motor driving portion shown in Fig. 2 as viewed along arrow Y2;
Fig. 6 is a diagram of the motor driving portion shown in Fig. 5, from which a first lid is removed;
Fig. 7 is a partial sectional view for illustrating a connection relation between a motor and an inverter of the motor driving portion shown in Fig. 2;
Fig. 8 is a perspective view showing the overall structure of a motor driving portion according to a second embodiment;
Fig. 9 is an exploded perspective view of the motor driving portion shown in Fig. 8;
Fig. 10 is a perspective view of the motor driving portion shown in Fig. 8 as viewed along arrow Y2;
Fig. 11 is a diagram of the motor driving portion shown in Fig. 10, from which a first lid is removed;
Fig. 12 is a perspective view showing the overall structure of a motor driving portion according to a third embodiment;
Fig. 13 is an exploded perspective view of the motor driving portion shown in Fig. 12;
Fig. 14 is a perspective view of the motor driving portion shown in Fig. 12 as viewed along arrow Y2;
Fig. 15 is a diagram of the motor driving portion shown in Fig. 14, from which a first lid is removed;
Fig. 16 is a perspective view showing the overall structure of a motor driving portion according to a fourth embodiment;
Fig. 17 is an exploded perspective view of the motor driving portion shown in Fig. 16;
Fig. 18 is a perspective view of the motor driving portion shown in Fig. 16 as viewed along arrow Y2; and
Fig. 19 is a diagram of the motor driving portion shown in Fig. 18, from which a first lid is removed.

### DESCRIPTION OF THE EMBODIMENTS

Embodiments are now described with reference to the drawings.

### (First Embodiment)

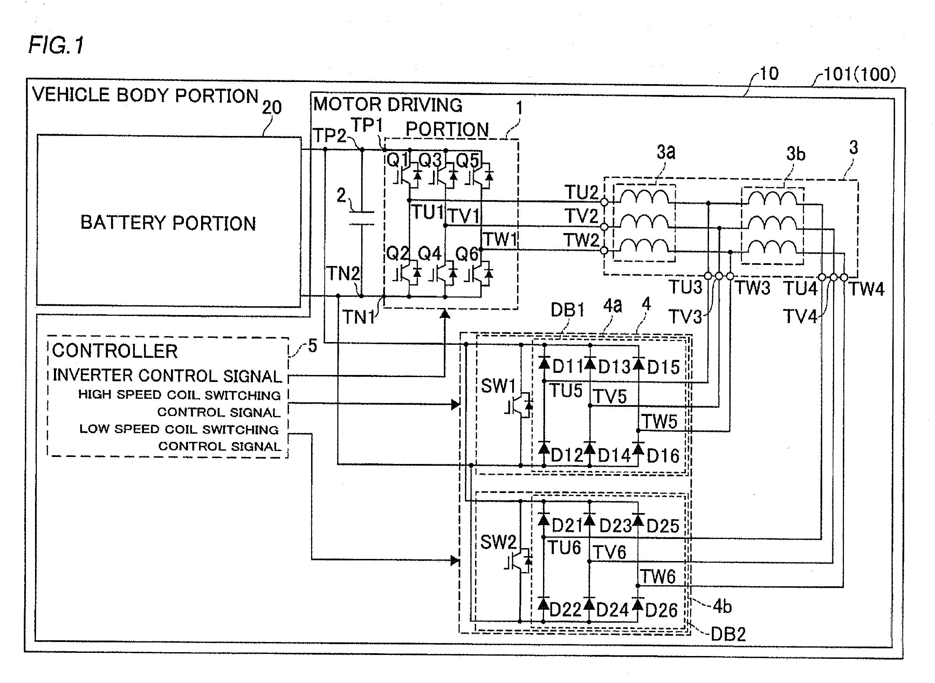

First, the schematic structure of a vehicle 100 and a motor driving portion 10 according to a first embodiment is described with reference to Fig. 1.

As shown in Fig. 1, the vehicle 100 includes a vehicle body portion 101, the motor driving portion 10 provided inside the vehicle body portion 101, and a battery portion 20 connected to the motor driving portion 10. The motor driving portion 10 is an example of the "motor driving device".

The motor driving portion 10 includes an inverter 1, a smoothing condenser 2, a motor 3, a coil switching portion 4, and a controller 5. The inverter 1 is an example of the "power converter".

The inverter 1 is configured to convert DC power input from the battery portion 20 into three-phase (U-phase, V-phase, and W-phase) AC power to output the AC power to the motor 3. The inverter 1 has DC input terminals TP1 and TN1 connected to the battery portion 20 and AC output terminals TU1, TV1, and TW1 connected to the motor 3. The DC input terminals TP1 and TN1 of the inverter 1 are connected with terminals TP2 and TN2 of the smoothing condenser 2, respectively. This smoothing condenser 2 is provided to smooth the DC power input to the inverter 1 from the battery portion 20. In other words, the smoothing condenser 2 is configured to reduce pulsation due to the load of voltage output from the battery portion 20.

Furthermore, the inverter 1 includes six switching elements Q1, Q2, Q3, Q4, Q5, and Q6 for power conversion. The switching elements Q1 and Q2 are configured to perform U-phase power conversion. The switching elements Q3 and Q4 are configured to perform V-phase power conversion.

The switching elements Q5 and Q6 are configured to perform W-phase power conversion. The switching elements Q1 to Q6 each are made of a SiC (silicon carbide) semiconductor.

The motor 3 is configured to be driven on the basis of three-phase AC power supplied from the inverter 1. The motor 3 includes a three-phase coil 3a for high speed drive and a three-phase coil 3b for low speed drive. The coils 3a and 3b are examples of the "high speed drive coil" and the "low speed drive coil", respectively.

The coils 3a and 3b are electrically connected in series. Terminals TU2, TV2, and TW2 of three phases (U-phase, V-phase, and W-phase) on a first side of the coil 3a are connected to the inverter 1. Terminals TU3, TV3, and TW3 of three phases on a second side of the coil 3a and a first side of the coil 3b are connected to a diode bridge DB1 of the coil switching portion 4 described later. Terminals TU4, TV4, and TW4 on a second side of the coil 3b are connected to a diode bridge DB2 of the coil switching portion 4 described later.

The coil switching portion 4 has a function of switching the connection states of the coils 3a and 3b of the motor 3. Specifically, the coil switching portion 4 includes a high speed coil switching portion 4a having a high speed coil switch SW1 to short the terminals TU3, TV3, and TW3 of the motor 3 and a low speed coil switching portion 4b having a low speed coil switch SW2 to short the terminals TU4, TV4, and TW4 of the motor 3. The high speed coil switch SW1 and the low speed coil switch SW2 are examples of the "switching elements". The high speed coil switch SW1 and the low speed coil switch SW2 each are made of a SiC semiconductor.

The high speed coil switching portion 4a includes the diode bridge DB1 having terminals TU5, TV5, and TW5 connected to the terminals TU3, TV3, and TW3 of the motor 3, respectively. The low speed coil switching portion 4b includes the diode bridge DB2 having terminals TU6, TV6, and TW6 connected to the terminals TU4, TV4, and TW4 of the motor 3, respectively.

The diode bridge DB1 is constituted by six diodes D11, D12, D13, D14, D15, and D16 to rectify three-phase (U-phase, V-phase, and W-phase) alternating current output from the terminals TU3, TV3, and TW3 of the motor 3. The diodes D11 and D12 are configured to rectify U-phase alternating current. The diodes D13 and D14 are configured to rectify V-phase alternating current. The diodes D15 and D16 are configured to rectify W-phase alternating current.

The diode bridge DB2 is constituted by six diodes D21, D22, D23, D24, D25, and D26 to rectify three-phase (U-phase, V-phase, and W-phase) alternating current output from the terminals TU4, TV4, and TW4 of the motor 3. The diodes D21 and D22 are configured to rectify U-phase alternating current. The diodes D23 and D24 are configured to rectify V-phase alternating current. The diodes D25 and D26 are configured to rectify W-phase alternating current.

The controller 5 is connected to an unshown controller of the entire vehicle 100 provided outside the motor driving portion 10. The controller 5 is configured to output control signals (an inverter control signal, a high speed coil switching control signal, and a low speed coil switching control signal) to the inverter 1 and the coil switching portion 4. Thus, the controller 5 controls switching of the switching elements Q1 to Q6 of the inverter 1, and controls switching of the high speed coil switch SW1 and the low speed coil switch SW2 of the coil switching portion 4. Although not shown in Fig. 1, the inverter 1, the coil switching portion 4, and the controller 5 each include a power supply circuit.

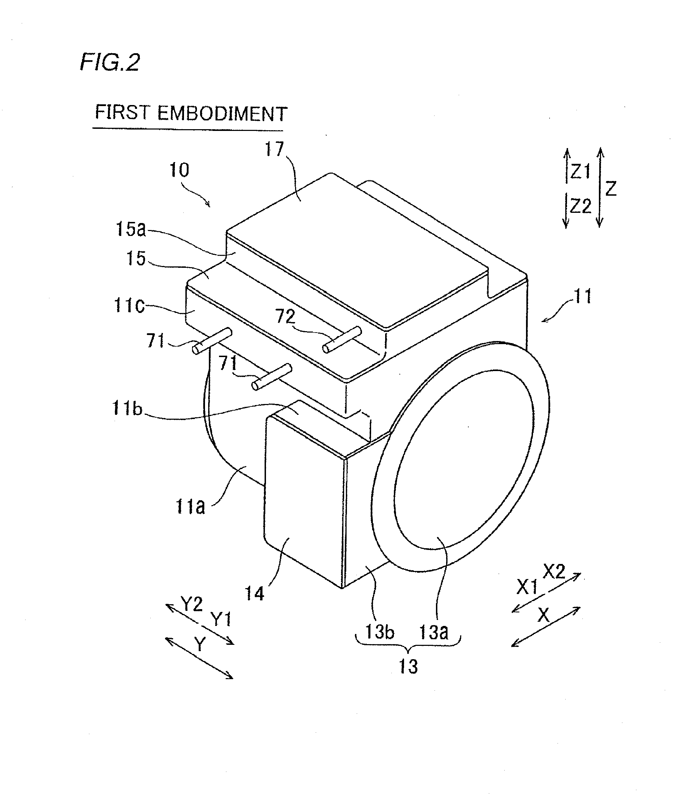

Next, the specific structure of the motor driving portion 10 according to the first embodiment is described with reference to Figs. 2 to 7. In this first embodiment, the coil switching portion 4 is constituted by a single module in which the high speed coil switching portion 4a and the low speed coil switching portion 4b (see Fig. 1) are integrated.

As shown in Figs. 2 to 7, the inverter 1, the smoothing condenser 2, the motor 3, and the coil switching portion 4 of the motor driving portion 10 are stored in a single case portion 11 made of metal (cast metal) such as aluminum. This case portion 11 also stores connecting terminal portions 61, 62, 63, 64, 65, and 66 (described later in detail) to electrically connect the motor 3 with the inverter 1 and the coil switching portion 4. The case portion 11 is an example of the "first case portion".

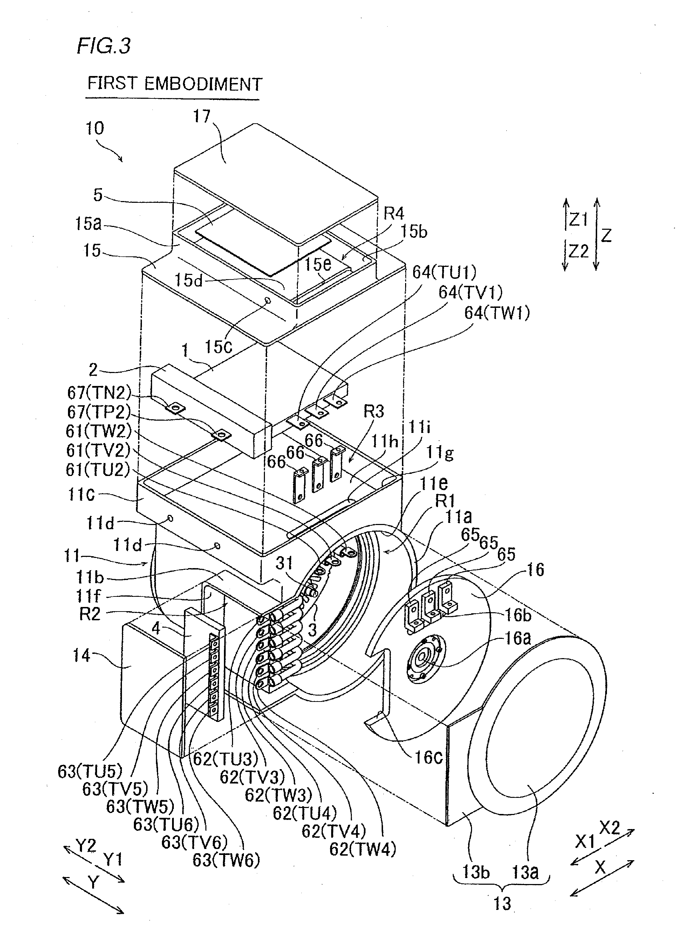

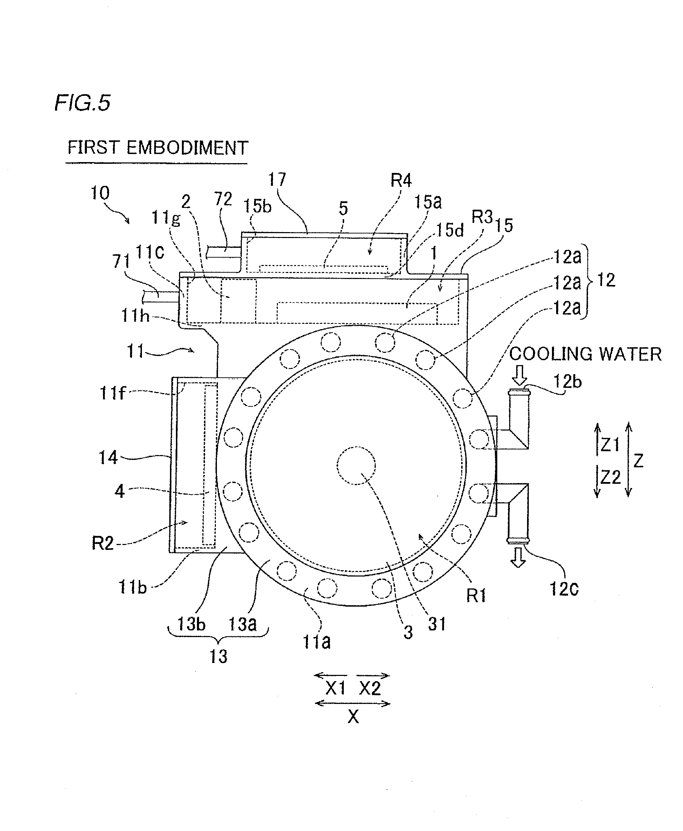

As shown in Fig. 3, the case portion 11 includes a portion 11a in the form of a circular cylinder extending along the extensional direction (axial direction: direction Y) of a rotating shaft 31 (see Fig. 3) of the motor 3. The portion 11a in the form of a circular cylinder is an example of the "cylindrical portion". In the first embodiment, the motor 3 is arranged in a first region R1 (space surrounded by the inner surface of the portion 11a in the form of a circular cylinder) on the inner surface side of the portion 11a in the form of a circular cylinder, as shown in Figs. 3 and 5.

Furthermore, the coil switching portion 4 and the inverter 1 are arranged in a second region R2 and a third region R3, respectively, on the outer surface side of the portion 11a in the form of a circular cylinder, as shown in Figs. 3 and 5. The second region R2 is a recessed space surrounded by a rectangular wall portion 11b formed to protrude laterally (along arrow X1) from the outer surface of the portion 11a in the form of a circular cylinder. The third region R3 is a recessed space surrounded by a rectangular wall portion 11c formed to protrude upward (along arrow Z1) from the outer surface of the portion 11a in the form of a circular cylinder.

The smoothing condenser 2 is arranged adjacent to the inverter 1 in the third region R3 where the inverter 1 is arranged, as shown in Figs. 3 and 5. As shown in Fig. 3, two through-holes 11d are provided in a portion along arrow X1, of the wall portion 11c surrounding the third region R3 to allow two connecting wires 71 (see Fig. 2) for electrically connecting connecting terminal portions 67 (connecting terminal portions corresponding to the aforementioned terminals TP2 and TN2 shown in Fig. 1) of the smoothing condenser 2 and the battery portion 20 (see Fig. 1) provided outside the motor driving portion 10 to each other to pass through the wall portion 11c.

As shown in Figs. 3 and 5, the first region R1 is arranged in the central portion of the case portion 11. The second region R2 and the third region R3 are arranged in a first direction (along arrow X1) and a second direction (along arrow Z1), respectively, orthogonal to the rotating shaft 31 of the motor 3 with respect to the first region R1. Thus, the coil switching portion 4 arranged in the second region R2 and the inverter 1 arranged in the third region R3 are arranged in the directions orthogonal to the rotating shaft 31 with respect to the motor 3 arranged in the first region R1. In the first embodiment, the coil switching portion 4 arranged in the second region R2 and the inverter 1 arranged in the third region R3 are arranged at an interval of 90 degrees along the rotational direction of the motor 3. Specifically, the coil switching portion 4 is arranged in a position rotated counterclockwise by 90 degrees from the arrangement position of the inverter 1, as shown in Fig. 5.

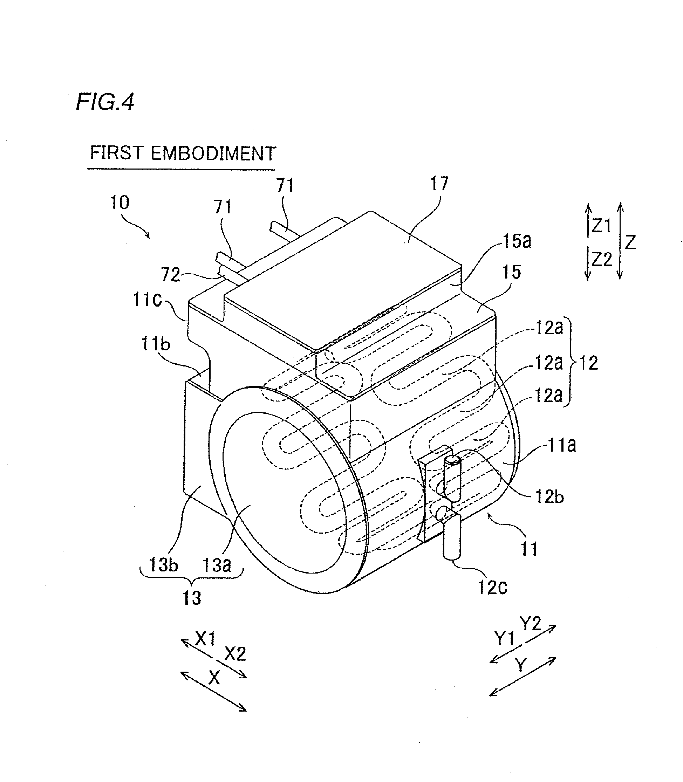

In the first embodiment, a single cooling tube 12 to cool the inverter 1, the motor 3, and the coil switching portion 4 is provided inside the portion 11a in the form of a circular cylinder of the case portion 11, as shown in Figs. 4 and 5. As shown in Fig. 5, the cooling tube 12 is arranged to be held between the motor 3 and the inverter 1 and between the motor 3 and the coil switching portion 4. Thus, the inverter 1, the motor 3, and the coil switching portion 4 are cooled by the same cooling channel (cooling channel constituted by the single cooling tube 12). The case portion 11 and the cooling tube 12 inside the case portion 11 are formed by sand mold casting, for example. The cooling tube 12 is an example of the "cooling portion".

As shown in Figs. 4 and 5, the cooling tube 12 is provided to circumferentially surround the motor 3 arranged in the first region R1 on the inner surface side of the portion 11a in the form of a circular cylinder. Specifically, the cooling tube 12 is so configured that a plurality of linear portions 12a (see Fig. 4) extending in the direction Y are arranged at substantially equal intervals along the rotational direction of the motor 3 inside the portion 11a in the form of a circular cylinder, as shown in Fig. 5.

As shown in Fig. 4, the plurality of linear portions 12a extending in the direction Y, of the cooling tube 12 are bent in the form of a U to be connected to each other on both ends thereof in the direction Y. Thus, the cooling tube 12 constitutes a line of the cooling channel from a first end 12b protruding from the outer surface of the portion 11a in the form of a circular cylinder opposite to the second region R2 (along arrow X2) to a second end 12c protruding from the outer surface of the portion 11a in the form of a circular cylinder opposite to the second region R2 (along arrow X2), in which cooling water flows. In the first embodiment, the inverter 1 is arranged on the side of the first end 12b (entrance of the cooling channel) of the cooling tube 12 while the coil switching portion 4 is arranged on the side of the second end 12c (exit of the cooling channel) of the cooling tube 12, as shown in Fig. 5.

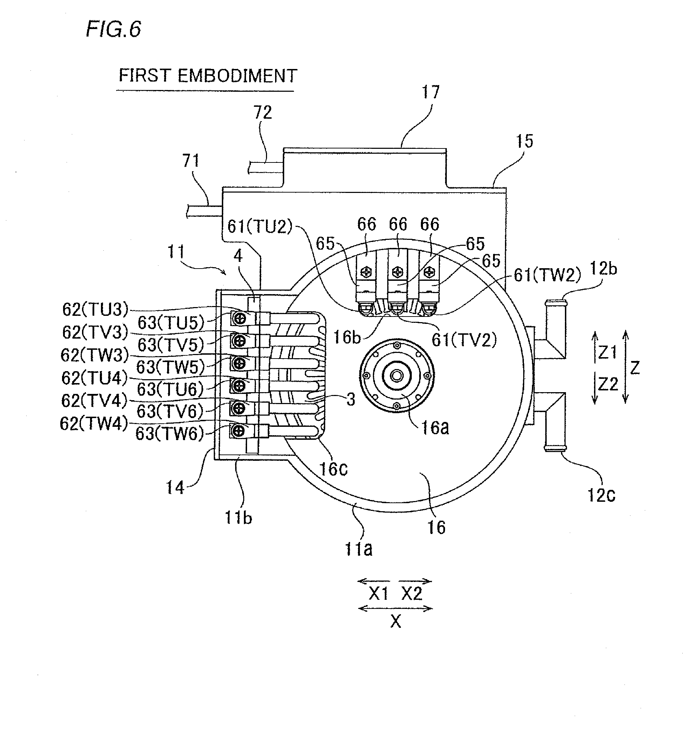

As shown in Figs. 3 and 6, a first opening 11e having a circular shape is provided in a portion of the case portion 11 corresponding to the first region R1. This first opening 11e is covered with a platelike first lid 13. The first lid 13 is attached to the portion of the case portion 11 corresponding to the first region R1 in an openable/closable manner with an unshown screw member or the like. The first lid 13 is configured to cover not only the first opening 11e of the case portion 11 but also a portion along arrow Y1 of a second opening 11f, described later, of the case portion 11. In other words, the first lid 13 is integrally provided with a circular portion 13a covering the first opening 11e of the case portion 11 and a rectangular portion 13b covering the portion along arrow Y1 of the second opening 11f, described later, of the case portion 11. A portion between the first lid 13 and the case portion 11 is sealed with an unshown sealing member having a waterproof function.

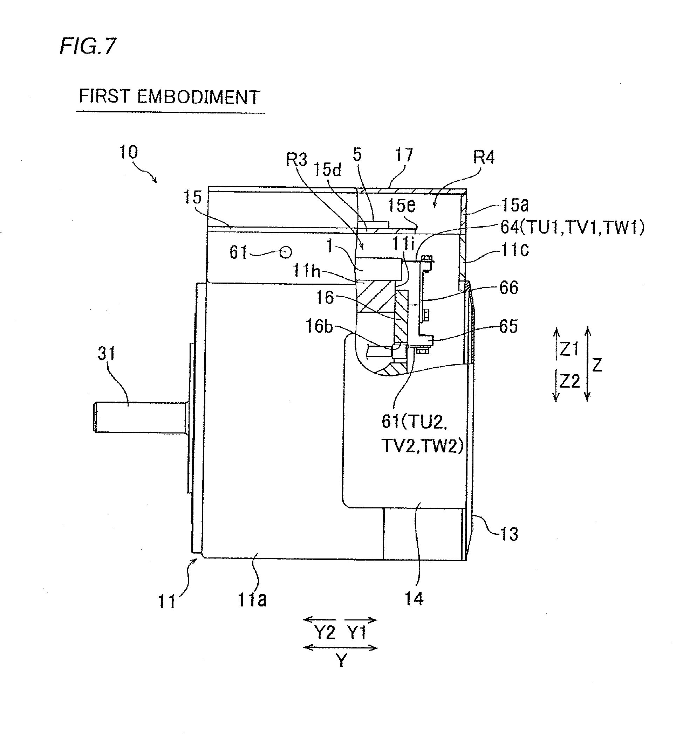

As shown in Fig. 3, a substantially disk-shaped partition wall 16 extending in the directions (direction X and direction Z) orthogonal to the rotating shaft 31 of the motor 3 is arranged between the first lid 13 and the motor 3 stored in the first region R1 of the case portion 11. A bearing 16a connected to the rotating shaft 31 is mounted on the central portion of this partition wall 16. As shown in Figs. 3, 6 and 7, a single hole 16b is provided in the vicinity of the central portion of the partition wall 16 in the direction X and a portion of the partition wall 16 along arrow Z1 to allow the three connecting terminal portions 61 (connecting terminal portions corresponding to the aforementioned terminals TU2, TV2, and TW2 shown in Fig. 1) of the motor 3 to pass through the partition wall 16. As shown in Figs. 6 and 7, the three connecting terminal portions 61 of the motor 3 passing through the hole 16b of the partition wall 16 are screwed on the L-shaped three connecting terminal portions 65, described later, mounted on the surface of the partition wall 16 opposite to the motor 3 (along arrow Y1).

Furthermore, a single notch 16c is provided in the vicinity of the central portion of the partition wall 16 in the direction Z and an end of the partition wall 16 along arrow X1 to allow the six connecting terminal portions 62 (connecting terminal portions corresponding to the aforementioned terminals TU3, TV3, TW3, TU4, TV4, and TW4 shown in Fig. 1) of the motor 3 to pass through the partition wall 16, as shown in Figs. 3, 6, and 7. As shown in Fig. 6, the six connecting terminal portions 62 of the motor 3 passing through the notch 16c of the partition wall 16 are screwed on the six connecting terminal portions 63 (connecting terminal portions corresponding to the aforementioned terminals TU5, TV5, TW5, TU6, TV6, and TW6 shown in Fig. 1) of the coil switching portion 4 arranged on the side along arrow X1 with respect to the motor 3.

As shown in Figs. 3, 6, and 7, the L-shaped three connecting terminal portions 65 are mounted on a portion in the vicinity of the aforementioned hole 16b, of the surface of the partition wall 16 opposite to the motor 3 (along arrow Y2). Although not shown in Figs. 3, 6, and 7, the three connecting terminal portions 65 each are mounted on the surface of the partition wall 16 along arrow Y1 through an insulating member made of resin or the like. As shown in Figs. 6 and 7, the three connecting terminal portions 65 are screwed on the three connecting terminal portions 61 of the motor 3 and the L-shaped three connecting terminal portions 66 screwed on the three connecting terminal portions 64 (connecting terminal portions corresponding to the aforementioned terminals TU1, TV1, and TW1 shown in Fig. 1) of the inverter 1.

As shown in Figs. 3 and 5, the second opening 11f and a third opening 11g each having a rectangular shape are provided in portions of the case portion 11 corresponding to the second region R2 and the third region R3, respectively. These second opening 11f and third opening 11g are covered with a platelike second lid 14 and a third lid 15 having shapes (rectangular shapes) corresponding to the second opening 11f and the third opening 11g, respectively. The second lid 14 and the third lid 15 are attached to the portions of the case portion 11 corresponding to the second region R2 and the third region R3, respectively, in an openable/closable manner with an unshown screw member or the like. A portion between the second lid 14 and the case portion 11 and a portion between the third lid 15 and the case portion 11 each are sealed with an unshown sealing member having a waterproof function.

As shown in Figs. 3 and 7, a single hole 11i is provided in an end along arrow Y1, of the bottom surface portion 11h of a portion of the case portion 11 corresponding to the third region R3 to allow the L-shaped three connecting terminal portions 66 to pass through the bottom surface portion 11h. As shown in Fig. 7, the three connecting terminal portions 66 passing through the hole 11i of the case portion 11 are screwed on the three connecting terminal portions 65 mounted on the partition wall 16 and the three connecting terminal portions 64 of the inverter 1. Thus, the connecting terminal portions 61 of the motor 3 and the connecting terminal portions 64 of the inverter 1 are electrically connected to each other through the connecting terminal portions 65 and 66.

As shown in Figs. 3 and 5, a fourth region R4 where the controller 5 is arranged is provided on the side of the third lid 15 opposite to the case portion 11 (along arrow Z1). The fourth region R4 is a recessed space surrounded by a wall portion 15a integrally formed on the third lid 15. Thus, the third lid 15 serves as a case portion to store the controller 5. The third lid 15 is an example of the "second case portion".

As shown in Figs. 3 and 5, a fourth opening 15b having a rectangular shape smaller than the third opening 11g of the case portion 11 is provided in a portion of the third lid 15 corresponding to the fourth region R4. This fourth opening 15b is covered with a platelike fourth lid 17 having a shape (rectangular shape) corresponding to the fourth opening 15b. The fourth lid 17 is attached to the portion of the third lid 15 corresponding to the fourth region R4 in an openable/closable manner with an unshown screw member or the like. A portion between the fourth lid 17 and the portion of the third lid 15 corresponding to the fourth region R4 is sealed with an unshown sealing member having a waterproof function.

As shown in Fig. 3, a single through-hole 15c is provided in a portion along arrow X1, of the wall portion 15a surrounding the fourth region R4 of the third lid 15 to allow a single connecting wire 72 (see Fig. 2) for connecting the controller 5 arranged in the fourth region R4 and the unshown controller of the entire vehicle 100 provided outside the motor driving portion 10 to each other to pass through the wall portion 15a. As shown in Figs. 3 and 7, a hole 15e is provided in an end along arrow Y1, of the bottom surface portion 15d of a portion of the third lid 15 corresponding to the fourth region R4 to allow unshown connecting wires, connecting terminal portions, etc. connected to the controller 5 to pass through the bottom surface portion 15d.

According to the first embodiment, as hereinabove described, the motor 3, the coil switching portion 4, and the inverter 1 are stored in the single case portion 11. Thus, formation of a dead space between each case portion can be suppressed, dissimilarly to a case where the motor 3, the coil switching portion 4, and the inverter 1 are stored in separate case portions and placed separately. Therefore, a space for the motor driving portion 10 can be saved. Furthermore, no separate case portion to store the motor 3, the coil switching portion 4, and the inverter 1 may be provided, and hence the number of components can be reduced. These effects are advantageous particularly in the vehicle 100 in which it is necessary to arrange a large number of members in a limited arrangement space.

According to the first embodiment, connecting wires to electrically connect the motor 3, the coil switching portion 4, and the inverter 1 can be also stored in the single case portion 11. Therefore, no space for placing the connecting wires to electrically connect the motor 3, the coil switching portion 4, and the inverter 1 may be provided separately outside the case portion 11. Thus, the space for the motor driving portion 10 can be further saved.

According to the first embodiment, the connecting wires to electrically connect the motor 3, the coil switching portion 4, and the inverter 1 are stored in the single case portion 11. Therefore, noise generated from the connecting wires due to switching operations (switching operations of the high speed coil switch SW1, the low speed coil switch SW2, and the switching elements Q1 to Q6) of the coil switching portion 4 and the inverter 1 can be shielded by the case portion 11. Thus, the noise generated due to the switching operations of the coil switching portion 4 and the inverter 1 can be inhibited from exerting bad influence on devices placed in the periphery of the motor driving portion 10 inside the vehicle 100.

According to the first embodiment, as hereinabove described, the coil switching portion 4 and the inverter 1 are arranged in the directions (along arrow X1 and arrow Z1) orthogonal to the rotating shaft 31 with respect to the motor 3. Thus, the size (length in the axial direction) of the motor driving portion 10 can be further reduced as compared with a case where the coil switching portion 4, the inverter 1, and the motor 3 are aligned in a direction (axial direction: direction Y) along the rotating shaft 31. Consequently, the space for the motor driving portion 10 in the axial direction can be saved.

According to the first embodiment, as hereinabove described, the single cooling tube 12 is placed to be held between the motor 3 and the coil switching portion 4 and between the motor 3 and the inverter 1. Thus, the motor 3, the coil switching portion 4, and the inverter 1 (three heating elements) can be efficiently cooled by the single cooling tube 12.

According to the first embodiment, as hereinabove described, the inverter 1 is arranged on the side of the first end 12b (entrance of the cooling channel) of the cooling tube 12 while the coil switching portion 4 is arranged on the side of the second end 12c (exit of the cooling channel) of the cooling tube 12. Thus, the inverter 1 in which switching is performed more frequently than in the coil switching portion 4 so that the temperature tends to rise can be arranged on the entrance side of the cooling channel in which colder cooling water flows as compared with the exit side of the cooling channel. Consequently, the inverter 1 and the coil switching portion 4 can be effectively cooled.

According to the first embodiment, as hereinabove described, the first region R1 where the motor 3 is arranged is provided in the central portion of the case portion 11, the second region R2 where the coil switching portion 4 is arranged is provided on the side along arrow X1 orthogonal to the rotating shaft 31 with respect to the first region R1, and the third region R3 where the inverter 1 is arranged is provided on the side along arrow Z1 orthogonal to the rotating shaft 31 with respect to the first region R1. Namely, the motor 3, the coil switching portion 4, and the inverter 1 are arranged in the first region R1, the second region R2, and the third region R3, respectively. Thus, the coil switching portion 4 and the inverter 1 can be easily arranged in the directions (along arrow X1 and arrow Z1) orthogonal to the rotating shaft 31 with respect to the motor 3.

According to the first embodiment, as hereinabove described, the case portion 11 includes the portion 11a in the form of a circular cylinder extending along the rotating shaft 31 of the motor 3. Furthermore, the first region R1 is arranged on the inner surface side of the portion 11a in the form of a circular cylinder, and the second region R2 and the third region R3 are arranged on the outer surface side of the portion 11a in the form of a circular cylinder. Thus, the first region R1 can be easily provided in the central portion of the case portion 11 by utilizing a region on the inner surface side of the portion 11a in the form of a circular cylinder. The second region R2 and the third region R3 can be easily provided in the directions (along arrow X1 and arrow Z1) orthogonal to the rotating shaft 31 with respect to the first region R1 of the case portion 11 by utilizing regions on the outer surface side of the portion 11a in the form of a circular cylinder.

According to the first embodiment, as hereinabove described, the first opening 11e, the second opening 11f, and the third opening 11g are provided in the portions of the case portion 11 corresponding to the first region R1, the second region R2, and the third region R3, respectively. Thus, access to (work on) the motor 3 arranged in the first region R1, the coil switching portion 4 arranged in the second region R2, and the inverter 1 arranged in the third region R3 can be easily facilitated through the first opening 11e, the second opening 11f, and the third opening 11g in assembling or during maintenance.

According to the first embodiment, as hereinabove described, the first lid 13, the second lid 14, and the third lid 15 are provided in an openable/closable manner to cover the first opening 11e, the second opening 11f, and the third opening 11g, respectively. Thus, the first lid 13, the second lid 14, and the third lid 15 covering the first opening 11e, the second opening 11f, and the third opening 11g, respectively can suppress entry of foreign matter through the first opening 11e, the second opening 11f, and the third opening 11g.

According to the first embodiment, as hereinabove described, the smoothing condenser 2 smoothing power input to the inverter 1 is arranged in the third region R3 where the inverter 1 is arranged. Thus, the smoothing condenser 2 and the inverter 1 can be arranged adjacent to each other, and hence the smoothing condenser 2 and the inverter 1 can be easily electrically connected to each other.

According to the first embodiment, as hereinabove described, the controller 5 controlling the coil switching portion 4 and the inverter 1 is arranged in the fourth region R4 of the third lid 15 for covering the third opening 11g of the case portion 11. Thus, the number of components can be reduced, dissimilarly to a case where a dedicated case portion for storing the controller 5 is provided separately from the third lid 15.

According to the first embodiment, as hereinabove described, the fourth opening 15b is provided in the portion of the third lid 15 corresponding to the fourth region R4 where the controller 5 is arranged, and the fourth lid 17 is provided in an openable/closable manner to cover the fourth opening 15b. Thus, access to (work on) the controller 5 arranged in the fourth region R4 of the third lid 15 can be easily facilitated through the fourth opening 15b in assembling or during maintenance. Furthermore, the fourth lid 17 covering the fourth opening 15b can suppress entry of foreign matter through the fourth opening 15b.

According to the first embodiment, as hereinabove described, the coil switching portion 4 and the inverter 1 are arranged at an interval of 90 degrees along the rotational direction of the motor 3. Thus, the length of the motor driving portion 10 in the direction X (transverse direction) or the direction Z (vertical direction) can be further reduced as compared with a case where the coil switching portion 4, the motor 3, and the inverter 1 are aligned along a direction (direction X or direction Z, for example) intersecting with the rotating shaft 31. Consequently, the space for the motor driving portion 10 can be effectively saved.

According to the first embodiment, as hereinabove described, the high speed coil switch SW1 and the low speed coil switch SW2 of the coil switching portion 4 and the switching elements Q1 to Q6 of the inverter 1 each are made of a SiC semiconductor. Thus, the switching elements Q1 to Q6, the high speed coil switch SW1, and the low speed coil switch SW2 each are made of a SiC semiconductor having excellent heat resistance, and hence the switching elements Q1 to Q6, the high speed coil switch SW1, and the low speed coil switch SW2 can be satisfactorily operated even if the inverter 1 and the coil switching portion 4 are arranged in the vicinity of a heating element (motor 3, for example).

### (Second Embodiment)

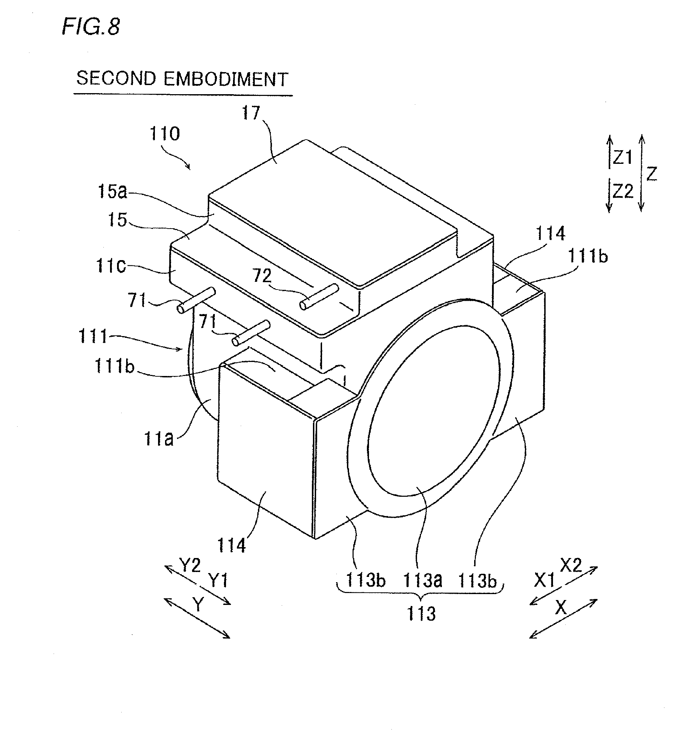

Next, the structure of a motor driving portion 110 according to a second embodiment is described with reference to Figs. 8 to 11. In this second embodiment, a high speed coil switching portion 4a and a low speed coil switching portion 4b are configured as separate modules, dissimilarly to the aforementioned first embodiment in which the high speed coil switching portion 4a and the low speed coil switching portion 4b constituting the coil switching portion 4 are integrated as a single module. The motor driving portion 110 is an example of the "motor driving device". The high speed coil switching portion 4a and the low speed coil switching portion 4b are examples of the "first coil switching portion" and the "second coil switching portion", respectively.

As shown in Figs. 8 to 11, an inverter 1, a smoothing condenser 2, a motor 3, the high speed coil switching portion 4a, and the low speed coil switching portion 4b of the motor driving portion 110 according to the second embodiment are stored in a single case portion 111 made of metal (cast metal) such as aluminum. This case portion 111 includes a portion 11a in the form of a circular cylinder extending along the axial direction (direction Y) of the motor 3, similarly to the aforementioned first embodiment. The case portion 111 is an example of the "first case portion".

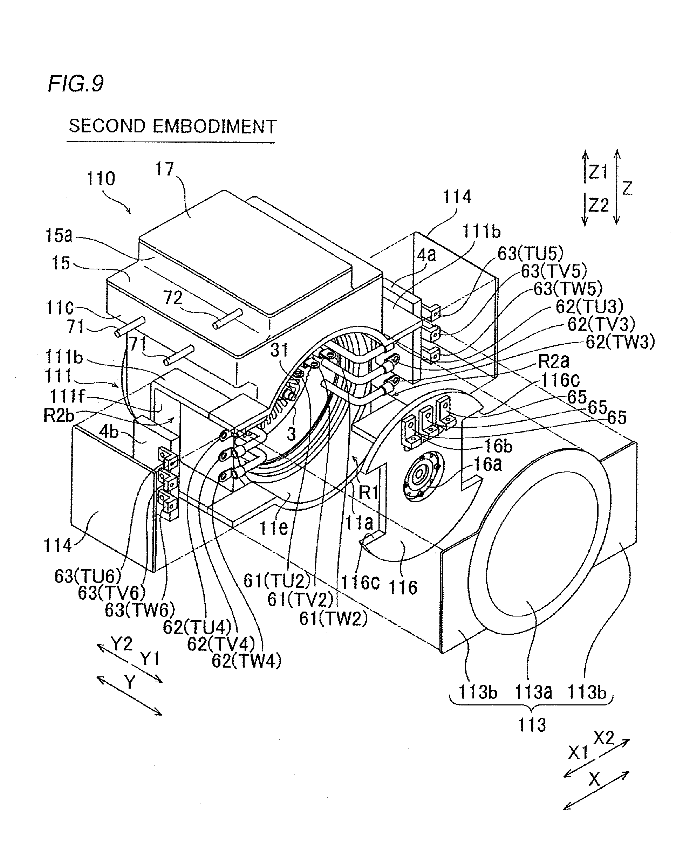

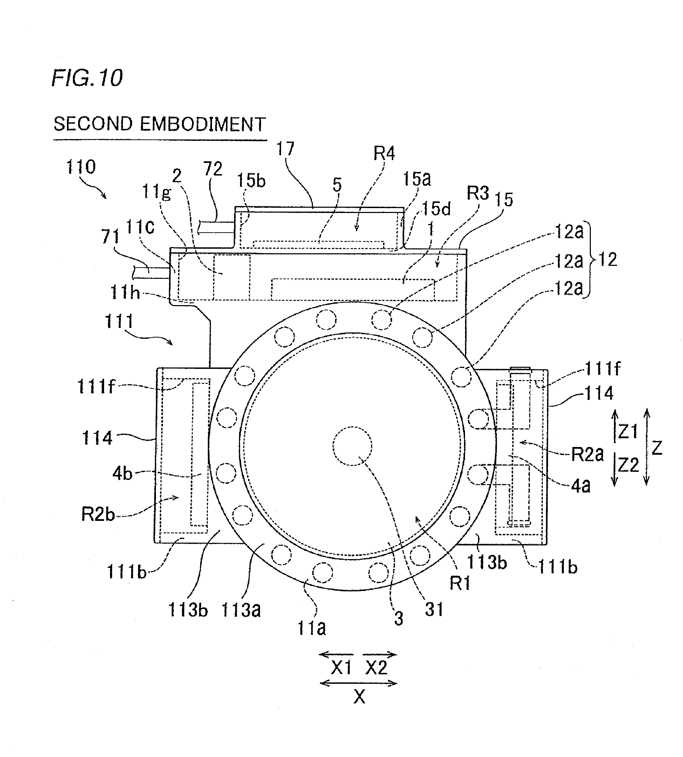

As shown in Figs. 9 and 10, the motor 3 is arranged in a first region R1 surrounded by the inner surface of the portion 11a in the form of a circular cylinder, similarly to the aforementioned first embodiment. The inverter 1 is arranged in a third region R3 surrounded by a rectangular wall portion 11c formed to protrude along arrow Z1 from the outer surface of the portion 11a in the form of a circular cylinder.

In the second embodiment, the high speed coil switching portion 4a and the low speed coil switching portion 4b are arranged separately from each other as the separate modules on the outer surface side of the portion 11a in the form of a circular cylinder of the case portion 111, as shown in Fig. 9 to 11. Specifically, the high speed coil switching portion 4a (low speed coil switching portion 4b) is arranged in a second region R2a (R2b) surrounded by a rectangular wall portion 111b formed to protrude along arrow X2 (arrow X1) from the outer surface of the portion 11a in the form of a circular cylinder.

As shown in Fig. 10, the high speed coil switching portion 4a (low speed coil switching portion 4b) arranged in the second region R2a (R2b) and the inverter 1 arranged in the third region R3 are arranged at an interval of 90 degrees along the rotational direction of the motor 3. Specifically, the high speed coil switching portion 4a (low speed coil switching portion 4b) is arranged in a position rotated clockwise (counterclockwise) by 90 degrees from the arrangement position of the inverter 1. Thus, the high speed coil switching portion 4a and the low speed coil switching portion 4b are arranged at an interval of 180 degrees along the rotational direction of the motor 3. In other words, the high speed coil switching portion 4a and the low speed coil switching portion 4b are linearly arranged in symmetric positions in a direction X (horizontal direction) through the motor 3.

As shown in Fig. 9, a first opening 11e similar to the first opening 11e according to the aforementioned first embodiment is provided in a portion of the case portion 111 corresponding to the first region R1. This first opening 11e is covered with a platelike first lid 113. In the second embodiment, the first lid 113 is configured to cover not only the first opening 11e of the case portion 111 but also portions along arrow Y1, of a pair of second openings 111f, described later, provided on both sides of the case portion 111 in the direction X. In other words, the first lid 113 is integrally provided with a circular portion 113a covering the first opening 11e of the case portion 111 and a pair of rectangular portions 113b covering the portions along arrow Y1, of the pair of second openings 111f, described later, of the case portion 111, as shown in Figs. 9 and 10.

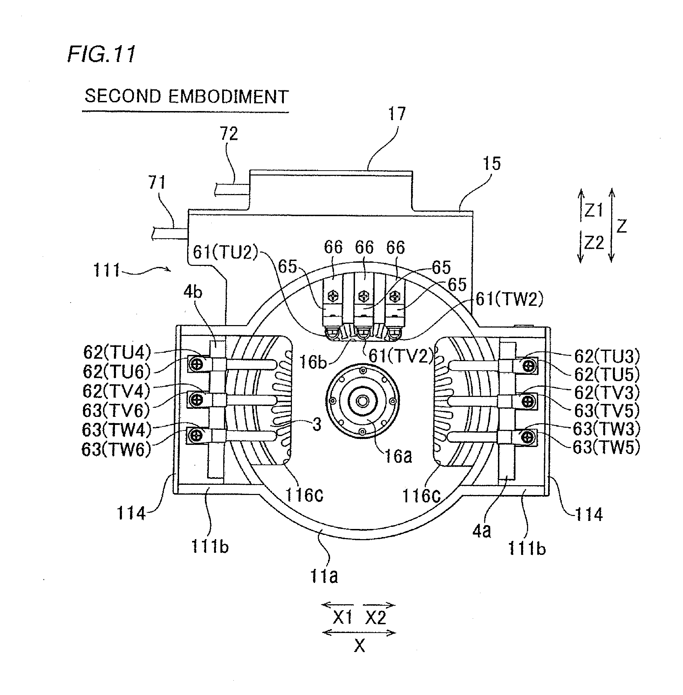

In the second embodiment, a substantially disk-shaped partition wall 116 is arranged between the motor 3 stored in the first region R1 of the case portion 111 and the first lid 113, as shown in Fig. 9. This partition wall 116 has a bearing 16a and a hole 16b similar to the bearing 16a and the hole 16b according to the aforementioned first embodiment. As shown in Figs. 9 and 11, a pair of notches 116c are provided in the vicinity of the central portion of the partition wall 116 in the direction Z and both ends of the partition wall 116 in the direction X to allow six connecting terminal portions 62 (connecting terminal portions corresponding to the aforementioned terminals TU3, TV3, TW3, TU4, TV4, and TW4 shown in Fig. 1) of the motor 3 to pass through the partition wall 116. As shown in Fig. 11, the six connecting terminal portions 62 of the motor 3 passing through the pair of notches 116c of the partition wall 116 are screwed on three connecting terminal portions 63 (connecting terminal portions corresponding to the aforementioned terminals TU5, TV5, and TW5 shown in Fig. 1) of the high speed coil switching portion 4a arranged in the second region R2a of the case portion 111 and three connecting terminal portions 63 (connecting terminal portions corresponding to the aforementioned terminals TU6, TV6, and TW6 shown in Fig. 1) of the low speed coil switching portion 4b arranged in the second region R2b.

In the second embodiment, the pair of rectangular second openings 111f are provided in portions corresponding to a pair of second regions R2a and R2b provided on both sides of the case portion 111 in the direction X, as shown in Figs. 9 and 10. The pair of second openings 111f are covered with a pair of platelike second lids 114 having shapes (rectangular shapes) corresponding to the second openings 111f. The pair of second lids 114 are attached to the portions of the case portion 111 corresponding to the pair of second regions R2a and R2b in an openable/closable manner with unshown screw members or the like.

The remaining structure of the second embodiment is similar to that of the aforementioned first embodiment.

According to the second embodiment, as hereinabove described, the coil switching portion 4 is divided into the high speed coil switching portion 4a and the low speed coil switching portion 4b. Thus, the operation of connecting the coil switching portion 4 and the motor 3 can be divided into the operation of connecting the high speed coil switching portion 4a and the motor 3 and the operation of connecting the low speed coil switching portion 4b and the motor 3. Consequently, workability can be improved.

According to the second embodiment, as hereinabove described, the high speed coil switching portion 4a and the low speed coil switching portion 4b are arranged in the symmetric positions in the direction X (horizontal direction) through the motor 3. Thus, the operation of connecting the high speed coil switching portion 4a and a coil 3a of the motor 3 for high speed drive and the operation of connecting the low speed coil switching portion 4b and a coil 3b of the motor 3 for low speed drive can be performed in positions separate from each other in the direction X. Consequently, workability can be further improved.

The remaining effects of the second embodiment are similar to those of the aforementioned first embodiment.

### (Third Embodiment)

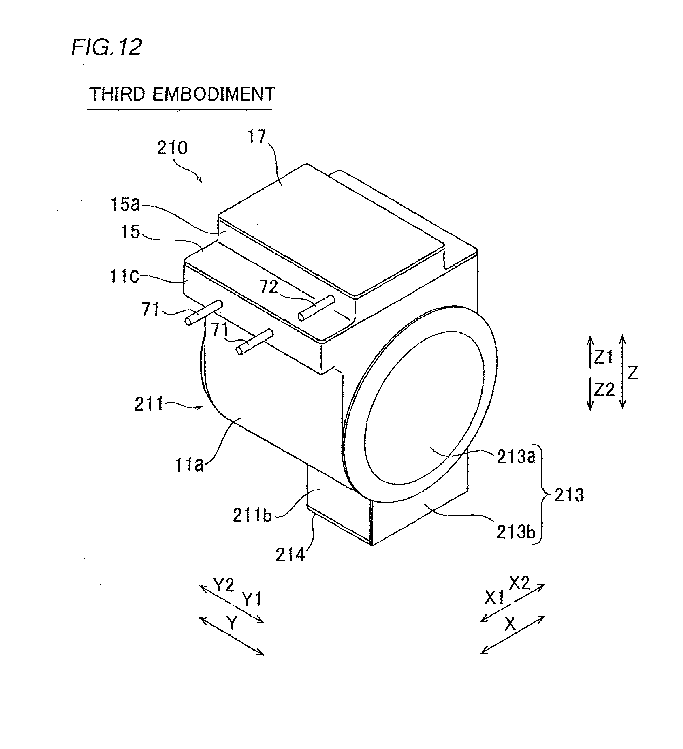

Next, the structure of a motor driving portion 210 according to a third embodiment is described with reference to Figs. 12 to 15. In this third embodiment, a coil switching portion 4 is arranged on the opposite side to an inverter 1 with respect to a motor 3, dissimilarly to the aforementioned first embodiment in which the inverter 1 and the coil switching portion 4 are arranged at an interval of 90 degrees along the rotational direction of the motor 3. The motor driving portion 210 is an example of the "motor driving device".

As shown in Figs. 12 to 15, the inverter 1, a smoothing condenser 2, the motor 3, and the coil switching portion 4 of the motor driving portion 210 according to the third embodiment are stored in a single case portion 211 made of metal (cast metal) such as aluminum. This case portion 211 includes a portion 11a in the form of a circular cylinder extending along the axial direction (direction Y) of the motor 3, similarly to the aforementioned first embodiment. The case portion 211 is an example of the "first case portion".

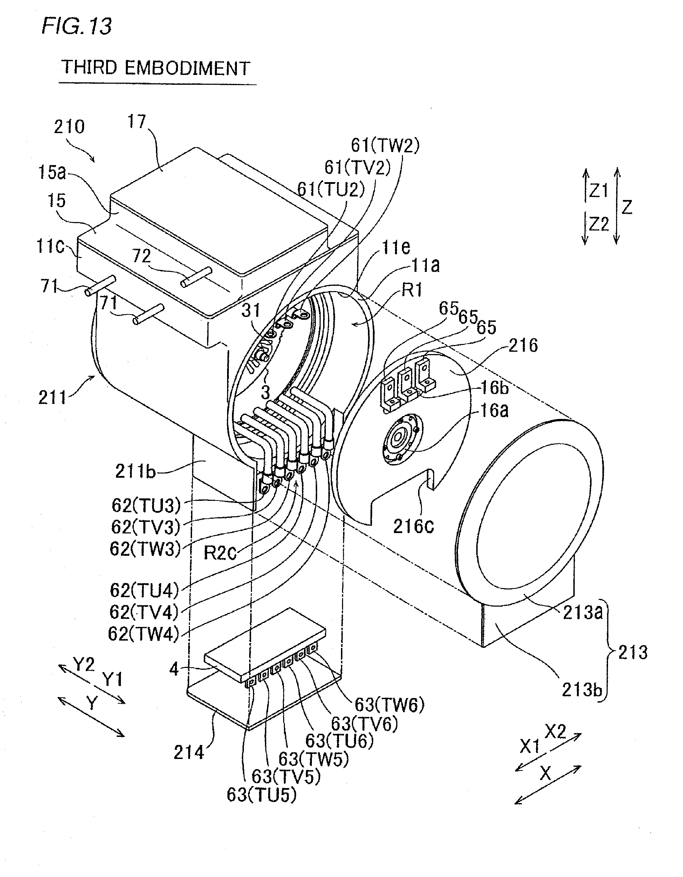

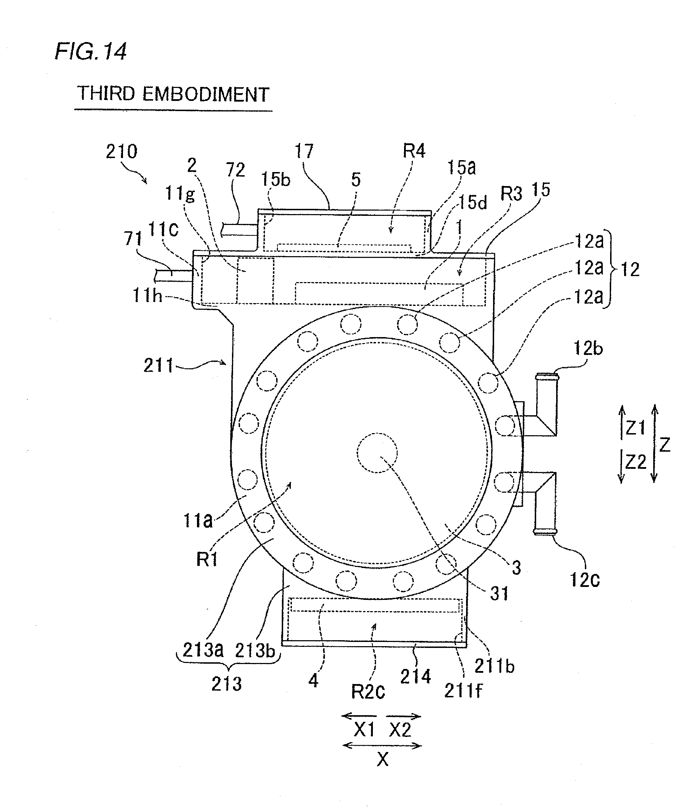

As shown in Figs. 13 and 14, the motor 3 is arranged in a first region R1 surrounded by the inner surface of the portion 11a in the form of a circular cylinder, similarly to the aforementioned first embodiment. The inverter 1 is arranged in a third region R3 surrounded by a rectangular wall portion 11c formed to protrude along arrow Z1 from the outer surface of the portion 11a in the form of a circular cylinder.

In the third embodiment, the coil switching portion 4 is arranged in a second region R2c surrounded by a rectangular wall portion 211b formed to protrude from the outer surface of the portion 11a in the form of a circular cylinder to the opposite side (along arrow Z2) to the third region R3, as shown in Figs. 13 and 14. Thus, the coil switching portion 4 and the inverter 1 are arranged at an interval of 180 degrees along the rotational direction of the motor 3. In other words, the coil switching portion 4 and the inverter 1 are linearly arranged in symmetric positions in a direction Z (vertical direction) through the motor 3.

As shown in Fig. 14, a second opening 211f is provided in a portion along arrow Z2 of the case portion 111 corresponding to the second region R2c. This second opening 211f is covered with a platelike second lid 214 (see Fig. 13) having a rectangular shape. The second lid 214 is attached to the portion of the case portion 211 corresponding to the second region R2c in an openable/closable manner with an unshown screw member or the like.

As shown in Fig. 13, a first opening 11e similar to the first opening 11e according to the aforementioned first embodiment is provided in a portion of the case portion 211 corresponding to the first region R1. This first opening 11e is covered with a platelike first lid 213. The first lid 213 is configured to cover not only the first opening 11e of the case portion 211 but also a portion along arrow Y1, of the aforementioned second opening 211f of the case portion 211. In other words, the first lid 213 is integrally provided with a circular portion 213a covering the first opening 11e of the case portion 211 and a rectangular portion 213b covering the portion along arrow Y1, of the second opening 211f of the case portion 211, as shown in Figs. 13 and 14.

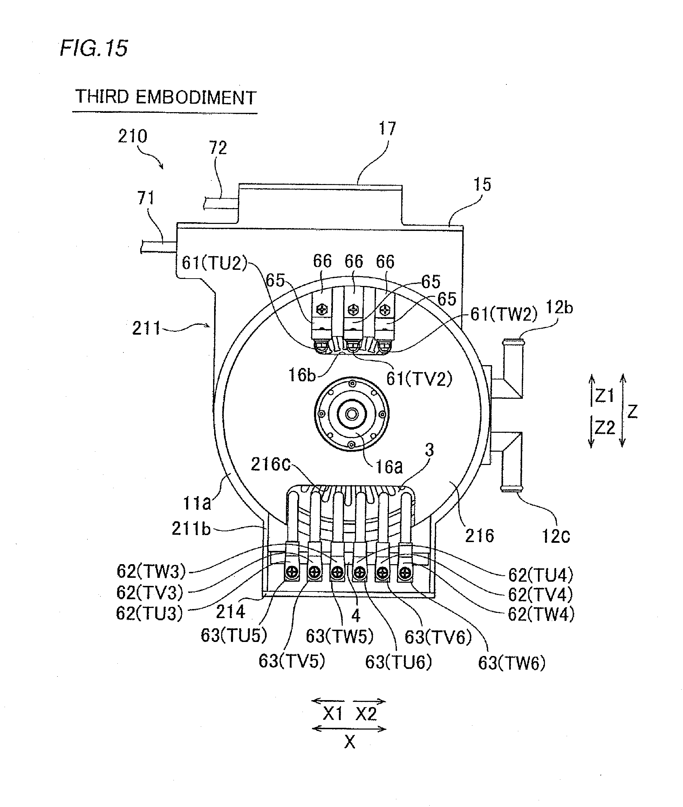

In the third embodiment, a substantially disk-shaped partition wall 216 is arranged between the motor 3 stored in the first region R1 of the case portion 211 and the first lid 213, as shown in Fig. 13. This partition wall 216 has a bearing 16a and a hole 16b similar to the bearing 16a and the hole 16b according to the aforementioned first embodiment. A notch 216c is provided in the vicinity of the central portion of the partition wall 216 in a direction X and an end of the partition wall 216 along arrow Z2 to allow six connecting terminal portions 62 (connecting terminal portions corresponding to the aforementioned terminals TU3, TV3, TW3, TU4, TV4, and TW4 shown in Fig. 1) of the motor 3 to pass through the partition wall 216. As shown in Fig. 15, the six connecting terminal portions 62 of the motor 3 passing through the notch 216c of the partition wall 216 are screwed on six connecting terminal portions 63 (connecting terminal portions corresponding to the aforementioned terminals TU5, TV5, TW5, TU6, TV6, and TW6 shown in Fig. 1) of the coil switching portion 4 arranged in the second region R2c of the case portion 211.

The remaining structure of the third embodiment is similar to that of the aforementioned first embodiment.

According to the third embodiment, as hereinabove described, the coil switching portion 4 and the inverter 1 are arranged in the symmetric positions in the direction Z through the motor 3. Thus, the operation of connecting the coil switching portion 4 and the motor 3 and the operation of connecting the inverter 1 and the motor 3 can be performed in positions separate from each other in the direction Z, and hence workability can be improved.

The remaining effects of the third embodiment are similar to those of the aforementioned first embodiment.

### (Fourth Embodiment)

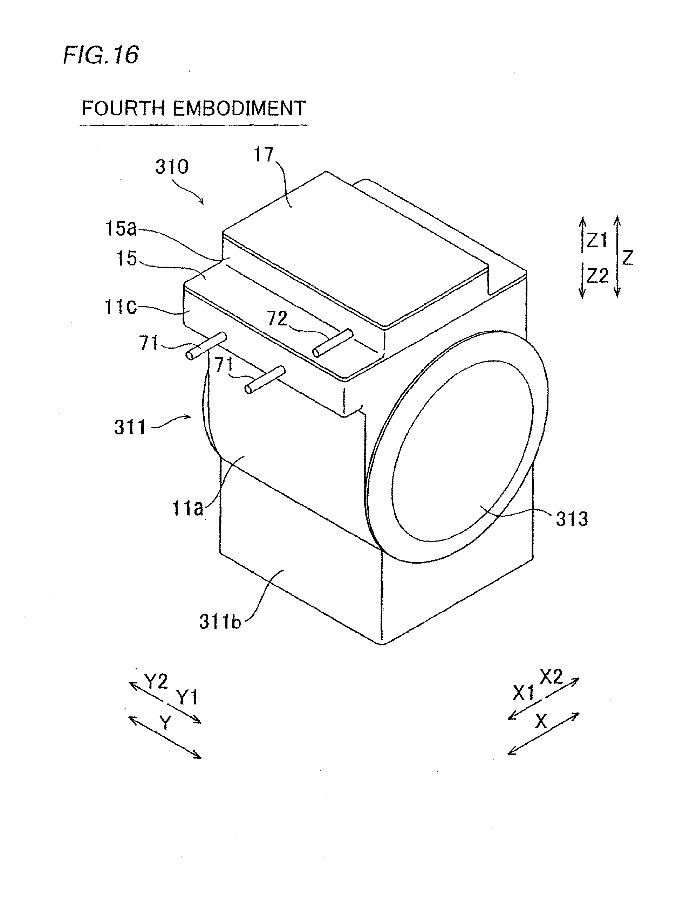

Next, the structure of a motor driving portion 310 according to a fourth embodiment is described with reference to Figs. 16 to 19. In this fourth embodiment, a coil switching portion 4 is arranged on the opposite side to an inverter 1 with respect to a motor 3, similarly to the aforementioned third embodiment, and the motor 3 and the coil switching portion 4 are connected to each other through a pair of terminal blocks 81 arranged in a case portion 311. The motor driving portion 310 is an example of the "motor driving device". The case portion 311 is an example of the "first case portion".

As shown in Figs. 16 to 19, the inverter 1, a smoothing condenser 2, the motor 3, and the coil switching portion 4 of the motor driving portion 310 according to the fourth embodiment are stored in the single case portion 311 made of metal (cast metal) such as aluminum. This case portion 311 includes a portion 11a in the form of a circular cylinder extending along the axial direction (direction Y) of the motor 3, similarly to the aforementioned third embodiment.

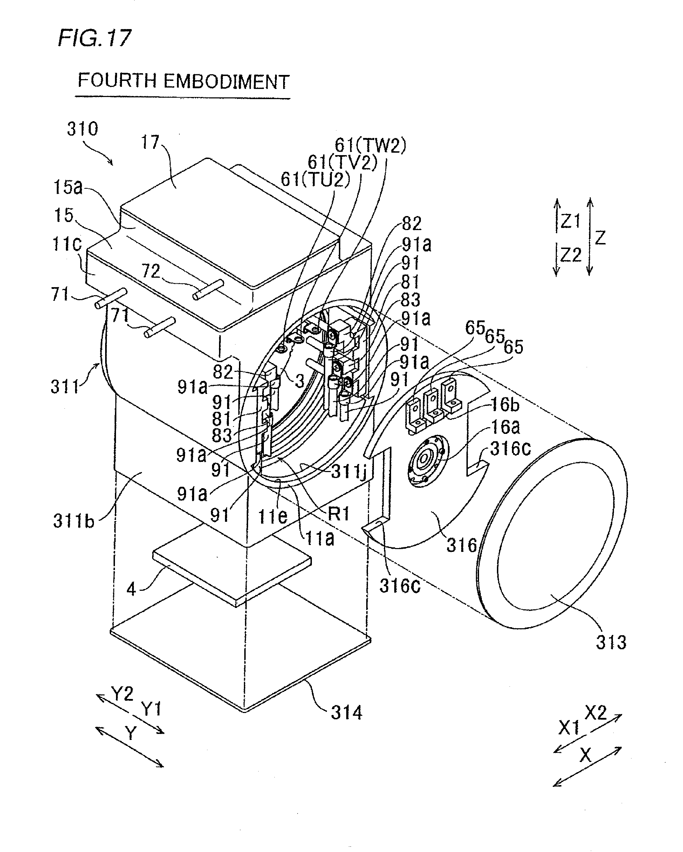

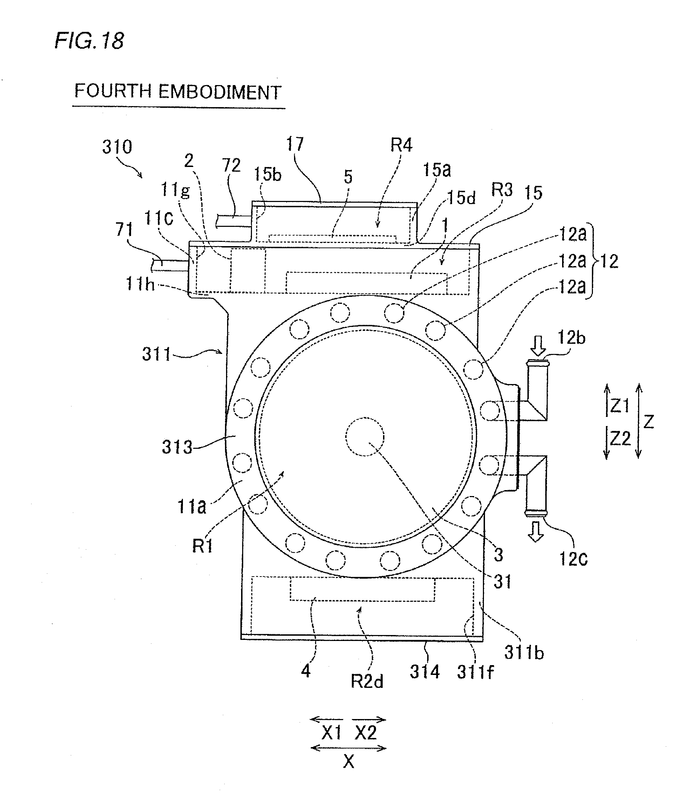

As shown in Figs. 17 and 18, the motor 3 is arranged in a first region R1 surrounded by the inner surface of the portion 11a in the form of a circular cylinder, similarly to the aforementioned third embodiment. The inverter 1 is arranged in a third region R3 surrounded by a rectangular wall portion 11c formed to protrude along arrow Z1 from the outer surface of the portion 11a in the form of a circular cylinder. In the fourth embodiment, the coil switching portion 4 is arranged in a second region R2d surrounded by a rectangular wall portion 311b formed to protrude along arrow Z2 from the outer surface of the portion 11a in the form of a circular cylinder.

As shown in Fig. 17, a first opening 11e similar to the first opening 11e according to the aforementioned third embodiment is provided in a portion of the case portion 311 corresponding to the first region R1. This first opening 11e is covered with a platelike first lid 313 having a shape (circular shape) corresponding to the first opening 11e. As shown in Fig. 18, a rectangular second opening 311f is provided in a portion along arrow Z2 of the case portion 311 corresponding to the second region R2d. This second opening 311f is covered with a platelike second lid 314 having a shape (rectangular shape) corresponding to the second opening 311f.

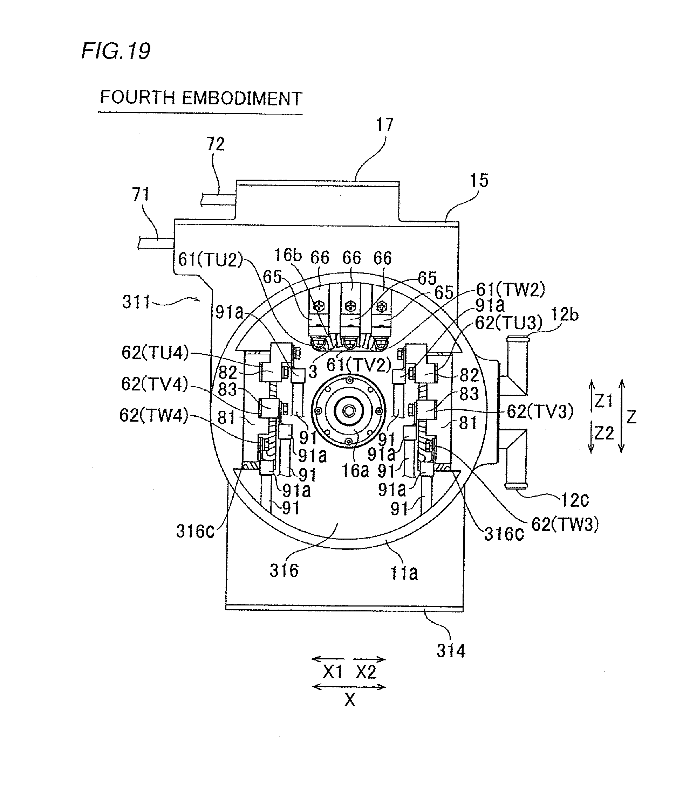

As shown in Fig. 17, a substantially disk-shaped partition wall 316 is arranged between the motor 3 stored in the first region R1 of the case portion 311 and the first lid 313. This partition wall 316 has a bearing 16a and a hole 16b similar to the bearing 16a and the hole 16b according to the aforementioned third embodiment. A pair of notches 316c are provided in the vicinity of the central portion of the partition wall 316 in a direction Z and both ends of the partition wall 316 in a direction X (horizontal direction) to allow six connecting terminal portions 62 (connecting terminal portions corresponding to the aforementioned terminals TU3, TV3, TW3, TU4, TV4, and TW4 shown in Fig. 1) of the motor 3 to pass through the partition wall 316. As shown in Fig. 19, the six connecting terminal portions 62 of the motor 3 passing through the pair of notches 316c of the partition wall 316 are screwed on the pair of terminal blocks 81, described later, arranged on the inner surface of the portion 11a in the form of a circular cylinder of the case portion 311.

In the fourth embodiment, the pair of terminal blocks 81 are arranged in portions along arrow Y1 and on both sides in the direction X, of the inner surface of the portion 11a in the form of a circular cylinder to electrically connect the motor 3 and the coil switching portion 4 to each other, as shown in Figs. 17 and 19. The pair of terminal blocks 81 are arranged to be opposed to each other in a direction (i.e., direction X) orthogonal to a rotating shaft 31 of the motor 3 and orthogonal to a direction in which the coil switching portion 4 and the inverter 1 are arranged with respect to the motor 3.

As shown in Fig. 19, the three connecting terminal portions 62 corresponding to the terminals TU3, TV3, and TW3 (TU4, TV4, and TW4) of the motor 3 are arranged in this order along arrow Z2 on each of the pair of terminal blocks 81 opposed to each other in the direction X. In the vicinity of ends of the pair of terminal blocks 81 along arrow Z1 (portions where the connecting terminal portions 62 corresponding to the terminals TU3 and TU4 of the motor 3 are arranged), connecting terminal portions 91a provided on tips of connecting wires 91 extending in the direction Z are screwed through columnar connecting terminal portions 82 extending in the direction X. Similarly, also in intermediate portions of the pair of terminal blocks 81 in the direction Z (portions where the connecting terminal portions 62 corresponding to the terminals TV3 and TV4 of the motor 3 are arranged), connecting terminal portions 91a provided on tips of connecting wires 91 extending in the direction Z are screwed through columnar connecting terminal portions 83 extending in the direction X (horizontal direction).

As shown in Fig. 19, the length of each of the connecting terminal portions 82 in the direction X is larger than the length of each of the connecting terminal portions 83 in the direction X. Specifically, portions of the connecting terminal portions 82 where the connecting terminal portions 91a are screwed are arranged inward (on the side of the rotating shaft 31) beyond portions of the connecting terminal portions 83 where the connecting terminal portions 91a are screwed. Thus, the connecting wires 91 having the connecting terminal portions 91a screwed on the connecting terminal portions 82 are arranged in positions deviating in the direction X with respect to the connecting wires 91 having the connecting terminal portions 91a screwed on the connecting terminal portions 83. Consequently, the connecting wires 91 having the connecting terminal portions 91a screwed on the connecting terminal portions 82 and the connecting wires 91 having the connecting terminal portions 91a screwed on the connecting terminal portions 83 can be inhibited from interfering with each other.

Furthermore, as shown in Fig. 19, in the vicinity of ends of the pair of terminal blocks 81 along arrow Z2 (portions where the connecting terminal portions 62 corresponding to the terminals TW3 and TW4 of the motor 3 are arranged), connecting terminal portions 91a provided on tips of connecting wires 91 extending in the direction Z are screwed directly. Thus, the connecting wires 91 having the connecting terminal portions 91a screwed in the vicinity of the ends of the terminal blocks 81 along arrow Z2 are arranged in positions deviating in the direction X with respect to the connecting wires 91 having the connecting terminal portions 91a screwed on the terminal blocks 81 through the connecting terminal portions 82 and 83 having the aforementioned lengths in the direction X different from each other. Consequently, the connecting wires 91 having the connecting terminal portions 91a screwed in the vicinity of the ends of the terminal blocks 81 along arrow Z2 and the connecting wires 91 having the connecting terminal portions 91a screwed on the terminal blocks 81 through the connecting terminal portions 82 and 83 can be inhibited from interfering with each other.

Although not shown in Fig. 19, the aforementioned six connecting wires 91 screwed on the pair of terminal blocks 81 also have connecting terminal portions similar to the connecting terminal portions 91a on ends opposite to the connecting terminal portions 91a. The connecting terminal portions provided on the ends opposite to the connecting terminal portions 91a of these six connecting wires 91 are electrically connected to unshown six connecting terminal portions (connecting terminals corresponding to the aforementioned terminals TU5, TV5, TW5, TU6, TV6, and TW6 shown in Fig. 1) of the coil switching portion 4 arranged in the second region R2d of the case portion 311 through a hole 311j (see Fig. 17) provided in the vicinity of an end along arrow Y1 and arrow Z2, of the inner surface of the portion 11a in the form of a circular cylinder.

The remaining structure of the fourth embodiment is similar to that of the aforementioned third embodiment.

According to the fourth embodiment, as hereinabove described, the terminal blocks 81 are provided in the case portion 311 to electrically connect the motor 3 and the coil switching portion 4 to each other. Thus, the motor 3 and the coil switching portion 4 can be easily electrically connected to each other through the terminal blocks 81.

The remaining effects of the fourth embodiment are similar to those of the aforementioned third embodiment.

It should be understood by those skilled in the art that various modifications, combinations, sub-combinations, and alterations may occur depending on design requirements and other factors insofar as they are within the scope of the appended claims or the equivalents thereof.

For example, in each of the aforementioned first to fourth embodiments, the motor driving portion (motor driving device) is loaded into the vehicle. Nevertheless, the motor driving portion (motor driving device) may alternatively be loaded in a ship or the like other than the vehicle.

In each of the aforementioned first to fourth embodiments, the coil switching portion and the inverter are arranged in the direction(s) orthogonal to the rotating shaft of the motor with respect to the motor. Nevertheless, the coil switching portion, the inverter, and the motor may alternatively be sequentially arranged in the direction along the rotating shaft of the motor in a single case portion extending along the rotating shaft of the motor.

In each of the aforementioned first to fourth embodiments, the motor, the coil switching portion, and the inverter are water-cooled. Nevertheless, the motor, the coil switching portion, and the inverter may alternatively be cooled with cooling means (air-cooling, a cooling element, etc., for example) other than water-cooling.

In each of the aforementioned first to fourth embodiments, the cooling tube is arranged to be held between the motor and the coil switching portion and between the motor and the inverter. Nevertheless, the cooling tube may alternatively be arranged only either between the motor and the coil switching portion or between the motor and the inverter.

In each of the aforementioned first to fourth embodiments, the motor, the coil switching portion, and the inverter are cooled by the same cooling channel (single cooling tube). Nevertheless, the motor, the coil switching portion, and the inverter may alternatively be cooled by separate cooling tubes.

In each of the aforementioned first to fourth embodiments, the motor, the coil switching portion, and the inverter are arranged in the three regions (the first region, the second region, and the third region) provided separately on the inner surface side and the outer surface side of the portion in the form of a circular cylinder. Nevertheless, the motor, the coil switching portion, and the inverter may alternatively be arranged in a single region formed inside a single case portion.

In each of the aforementioned first to fourth embodiments, the case portion storing the motor, the coil switching portion, and the inverter includes the portion in the form of a circular cylinder, and the motor is arranged on the inner surface side of the portion in the form of a circular cylinder while the coil switching portion and the inverter are arranged on the outer surface side of the portion in the form of a circular cylinder. Nevertheless, the first case portion may alternatively include a portion in the form of a rectangular cylinder, and the motor may alternatively be arranged on the inner surface side of the portion in the form of a rectangular cylinder while the coil switching portion and the inverter may alternatively be arranged on the outer surface side of the portion in the form of a rectangular cylinder.

In each of the aforementioned first to fourth embodiments, the smoothing condenser is arranged in the second region where the inverter is arranged. Nevertheless, the inverter and the smoothing condenser may alternatively be arranged in separate regions.

In each of the aforementioned first to fourth embodiments, a case portion (second case portion) to store the controller is integrally provided on the third lid. Nevertheless, the case portion (second case portion) to store the controller may alternatively be integrally provided on the first lid or the second lid other than the third lid. Furthermore, a dedicated case portion for storing the controller may alternatively be provided separately from the first lid, the second lid, and the third lid.

In the aforementioned first embodiment (second embodiment), the coil switching portion (the high speed coil switching portion and the low speed coil switching portion) and the inverter are arranged at an interval of 90 degrees along the rotational direction of the motor. Nevertheless, the coil switching portion (the high speed coil switching portion and the low speed coil switching portion) and the inverter may alternatively be arranged at an interval of an angle less than 90 degrees or an angle more than 90 degrees along the rotational direction of the motor.

In the aforementioned second embodiment, the high speed coil switching portion and the low speed coil switching portion are arranged at an interval of 180 degrees along the rotational direction of the motor to be opposed to each other with respect to the motor. Nevertheless, the high speed coil switching portion and the low speed coil switching portion may alternatively be arranged at an interval of an angle less than 180 degrees along the rotational direction of the motor.

In each of the aforementioned third and fourth embodiments, the coil switching portion and the inverter are arranged at an interval of 180 degrees along the rotational direction of the motor to be opposed to each other with respect to the motor. Nevertheless, the coil switching portion and the inverter may alternatively be arranged at an interval of an angle less than 180 degrees along the rotational direction of the motor.

In each of the aforementioned first to fourth embodiments, the switching elements of the inverter and the high speed coil switch and the low speed coil switch of the coil switching portion each are made of a SiC semiconductor. Nevertheless, the switching elements of the inverter and the high speed coil switch and the low speed coil switch of the coil switching portion each may alternatively be made of a Si semiconductor, for example, other than a SiC semiconductor, or constituted by switching elements other than the switching elements each containing a semiconductor.

## Claims

1. A motor driving device (10, 110, 210, 310) comprising:
a motor (3) including a high speed drive coil (3a) and a low speed drive coil (3b);
a coil switching portion (4) switching connection states of the high speed drive coil and the low speed drive coil of the motor;
a power converter (1) connected to the motor; and
a single first case portion (11, 111, 211, 311) storing at least the motor, the coil switching portion,
and the power converter.

2. The motor driving device according to claim 1,
wherein
each of the coil switching portion and the power converter is arranged in a direction intersecting with a rotating shaft (31) of the motor with respect to the motor.

3. The motor driving device according to claim 2, further comprising a cooling portion (12) cooling the motor, the coil switching portion, and the power converter, wherein
the cooling portion is arranged to be held at least either between the motor and the coil switching portion or between the motor and the power converter.

4. The motor driving device according to claim 3,
wherein
the cooling portion is constituted by a single cooling channel arranged to be held both between the motor and the coil switching portion and between the motor and the power converter.

5. The motor driving device according to claim 4,
wherein
the power converter is arranged on an entrance side of the cooling channel, and
the coil switching portion is arranged on an exit side of the cooling channel.

6. The motor driving device according to any one of claims 2 to 5, wherein
the first case portion includes:
a first region (R1) where the motor is arranged, provided in a central portion of the first case portion,
a second region (R2, R2a, R2b, R2c, R2d) where the coil switching portion is arranged, provided in a first direction intersecting with the rotating shaft with
respect to the first region, and
a third region (R3) where the power converter is arranged, provided in a second direction intersecting with the rotating shaft with respect to the first region.

7. The motor driving device according to claim 6,
wherein
the first case portion includes a cylindrical portion (11a) extending along the rotating shaft,
the first region is arranged on an inner surface side of the cylindrical portion, and
the second region and the third region are arranged on an outer surface side of the cylindrical portion.

8. The motor driving device according to claim 6 or 7, wherein
portions of the first case portion corresponding to the first region, the second region, and the third region are provided with a first opening (11e), a second opening (11f, 111f, 211f, 311f), and a third opening (11g), respectively.

9. The motor driving device according to claim 8, further comprising a first lid (13, 113, 213, 313), a second lid (14, 114, 214, 314), and a third lid (15) covering the first opening, the second opening, and the third opening, respectively, in an openable/closable manner.

10. The motor driving device according to any one of claims 6 to 9, further comprising a smoothing condenser (2) smoothing power input to the power converter, wherein
the smoothing condenser is arranged in the third region where the power converter is arranged.

11. The motor driving device according to any one of claims 6 to 10, further comprising:
a controller (5) controlling the coil switching portion and the power converter; and
a second case portion (15) adjacently arranged outside the third region of the first case portion in the second direction to store the controller.

12. The motor driving device according to claim 11,
wherein
a portion of the first case portion corresponding to the third region is provided with a third opening (11g),
the motor driving device further comprising a third lid (15) covering the third opening in an openable/closable manner, wherein
the second case portion is integrally provided on the third lid.

13. The motor driving device according to claim 11 or 12, wherein
the second case portion includes a fourth region (R4) where the controller is arranged, and
a portion of the second case portion corresponding to the fourth region is provided with a fourth opening (15b),
the motor driving device further comprising a fourth lid (17) covering the fourth opening in an openable/closable manner.

14. The motor driving device according to any one of claims 1 to 13, wherein
the coil switching portion is divided into a first coil switching portion (4a) connected to the high speed drive coil and a second coil switching portion (4b) connected to the low speed drive coil to be arranged.

15. The motor driving device according to any one of claims 1 to 14, loaded in a vehicle (100).
